## Europäisches Patentamt
## European Patent Office
## Office européen des brevets

(19)

(11) Numéro de publication: **0 011 578**
**B1**

(12)

# FASCICULE DE BREVET EUROPEEN

(45) Date de publication du fascicule du brevet: **12.05.82**

(51) Int. Cl.³: **G 01 N 3/46,** E 02 D 1/02, E 21 B 49/00

(21) Numéro de dépôt: **79400891.2**

(22) Date de dépôt: **20.11.79**

(54) **Procédé et dispositif de mesure de la dureté d'une roche dans un forage.**

(30) Priorité: **21.11.78 FR 7832747**

(43) Date de publication de la demande:
**28.05.80 Bulletin 80/11**

(45) Mention de la délivrance du brevet:
**12.05.82 Bulletin 82/19**

(84) Etats contractants désignés:
**CH DE GB**

(56) Documents cités:
**DE - B - 1 040 987**
**FR - A - 1 587 397**
**US - A - 3 175 392**
**US - A - 3 283 566**
**US - A - 3 283 567**
**US - A - 3 937 069**

(73) Titulaire: **ASSOCIATION POUR LA RECHERCHE ET LE DEVELOPPEMENT DES METHODES ET PROCESSUS INDUSTRIELS (ARMINES)**
**60, Boulevard Saint-Michel**
**F-75272 Paris Cédex 06 (FR)**

(72) Inventeur: **Fine, Jacques**
**10, rue des Etats-Unis**
**F-77300 Fontainebleau (Seine et Marne) (FR)**

(74) Mandataire: **Ducas, Michel Louis Marie et al,**
**Cabinet Boettcher 23, rue La Boétie**
**F-75008 Paris (FR)**

Courier Press, Leamington Spa, England.

## Procédé et dispositif de mesure de la dureté d'une roche
### dans un forage

L'invention concerne un procédé de mesure de la dureté d'une roche affleurant la paroi d'un forage au moyen d'une sonde liée à un câble de traction dans lequel on munit la sonde de deux outils de rayage diamétralement opposés, on les écarte à force et on exerce une traction ascendante sur le câble. L'invention concerne également une sonde pour la mise en oeuvre de ce procédé.

Lorsqu'on désire obtenir des informations sur la résistance mécanique des terrains rencontrés dans un forage, on doit procéder à des essais de résistance sur des échantillons prélevés par carottage vertical ou oblique. Le prélèvement d'échantillons est donc une méthode toujours coûteuse et longue. En outre il n'est pas toujours possible de ramener des échantillons suffisamment volumineux pour procéder à des essais de résistance mécanique, surtout lorsqu'il s'agit de terrains sédimentaires tendres. Un procédé et un dispositif du type décrit au début et conçu à cet effet ont été décrits dans le brevet US 3 283 566. Mais le procédé et le dispositif de ce brevet ne donnent aucune garantie de fiabilité, car les outils sont écartés de façon constante sans considération des inégalités de paroi ou de diamètre du forage.

Le but de l'invention est de proposer un nouveau procédé évitant de tels inconvénients et donc de très grande fiabilité. Ce but est atteint, grâce à l'invention, dans un procédé du type décrit au début, par le fait qu'on enfonce les outils de rayage d'une profondeur constante de pénétration dans la roche et on mesure la force de traction exercée sur le câble pendant le déplacement ascendant de la sonde.

Des études effectuées par la demanderesse ont montré qu'il y avait une relation linéaire entre l'effort ainsi exercé sur les outils de rayage, pour une profondeur de passe constante, et la résistance à la compression de la roche constituant les parois explorées du sondage.

Grâce à l'invention on pourra économiser des travaux coûteux lors de l'élaboration d'avant-projets d'exploitation minières, et ce avant même l'ouverture de tous travaux miniers dans le gisement, tels que; recherche d'un bon toit ou d'un bon mur pour une exploitation souterraine, recherche d'un banc pour l'ancrage des boulons, prévision du comportement des terrains lors d'un foudroyage, en particulier recherche des bancs durs, ripabilité des terrains pour une exploitation en découverte, creusement de cheminées d'aérage par alésage d'un trou central.

Les buts de l'invention sont également atteints par une sonde qui comporte un ensemble comprenant:

—deux chariots diamétralement opposés, mobiles en écartement et en rapprochement l'un de l'autre, chacun des chariots comportant;

—au moins deux galets d'appui à la paroi écartés dans la direction du forage et disposés pour le déplacement en appui du chariot dans cette même direction du forage;

—un outil de pénétration par rayage disposé en position intermédiaire entre les galets d'appui écartés dans le sens du forage et s'étendant au-delà de l'alignement ou du plan défini par ces galets;

—des moyens commandés d'écartement à force des deux chariots en appui contre la paroi du forage;

—des moyens de mesure de la force de traction exercée sur le câble.

Selon un mode de réalisation préféré, les chariots sont portés oscillants à l'extrémité de bras oscillant symétriquement en sens opposés et dirigés vers le bas, l'axe d'oscillation de chaque chariot étant situé, en écartement, entre l'outil de pénétration par rayage et le ou les galets le plus ou les plus écartés du bras oscillant.

Bien que son déplacement linéaire puisse être mesuré par la longueur déroulée du câble de traction, il est préféré, pour éliminer les erreurs dues à l'allongement élastique de ce câble, que la sonde comporte elle-même des moyens de mesure de son déplacement linéaire dans le forage. Ces moyens devront être insensibles à l'eau et aux boues.

Bien qu'on puisse exercer sur le câble de traction une traction au moyen d'un treuil dynamométrique, il est préféré, selon l'invention, d'utiliser un treuil de type courant, pourvu que la sonde comporte un dynamomètre intercalé entre le câble et l'ensemble comprenant les deux chariots et les moyens d'écartement de ces chariots.

D'autres caractéristiques et avantages ressortiront de la description qui sera donnée ci-après uniquement à titre d'exemple. On se reportera à cet effet aux dessins annexés, dans lesquels:

—la figure 1 représente, en coupe schématique, la partie inférieure d'une sonde selon l'invention en position de mesure dans un forage,

—la figure 2 représente, en coupe schématique, la partie supérieure de la même sonde,

—la figure 3 représente, vu de face, l'un des chariots de rayage de la figure 1,

—la figure 4 représente la partie la plus basse de la sonde, mais en position de descente ou de remontée sans mesure,

—la figure 5 représente une variante, analogue à la représentation de la figure 4 pour des forages de grand diamètre.

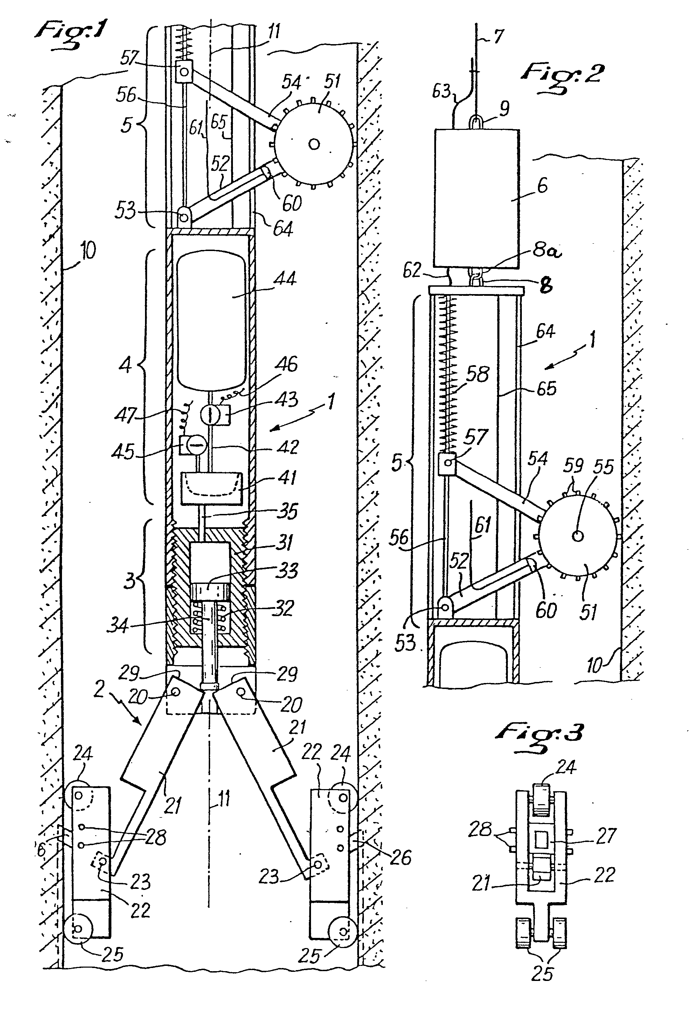

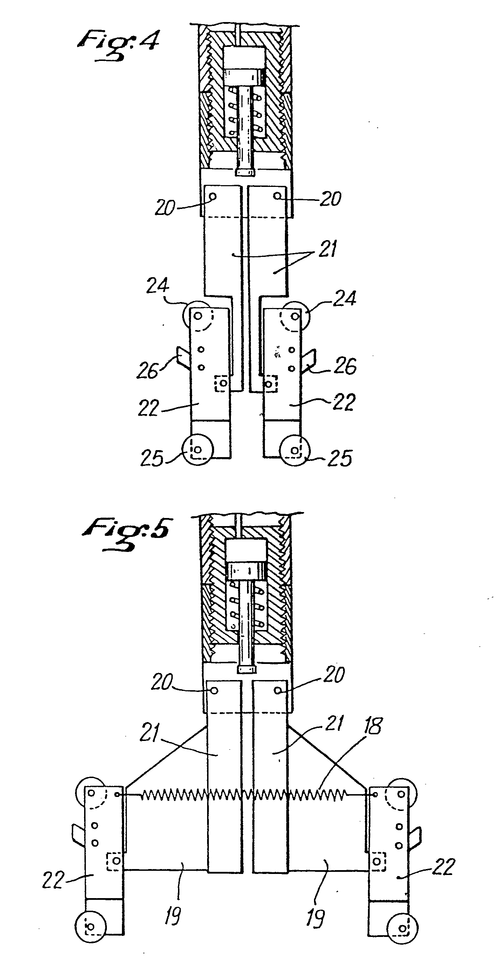

La sonde représentée sur les figures 1 à 4 sera décrite, en partant du bas. Elle comporte essentiellement un corps tubulaire 1, pouvant être suspendu, par un anneau 8, à l'anneau inférieur 8a d'un dynamomètre 6 intercalé entre le corps 1 et un câble de traction 7 au moyen d'un anneau 9.

Le corps 1 comporte: un dispositif 2 de support de chariots; un dispositif 3 de poussée en écartement des chariots vers la paroi 10 d'un forage; un dispositif 4 de commande de poussée et de fourniture d'énergie de poussée au dispositif 3; un dispositif 5 de mesure du déplacement linéaire du corps 1 dans le forage.

Ces différents dispositifs sont montés soit dans un carter tubulaire unique, soit dans des unités fonctionnelles solidement liées ensemble.

L'extrémité inférieure du corps 1 porte deux axes d'articulation 20 écartés de l'axe 11 du corps 1 et perpendiculaires à cet axe 11. Sur ces axes 20 sont montés deux bras oscillants 21, dont les extrémités libres inférieures peuvent être rapprochées (figure 4) ou écartées (figure 1) comme il sera décrit plus loin. A l'extrémité libre de chaque bras 21 est monté un chariot 22 pouvant pivoter autour d'un axe 23 parallèle aux axes 20. Chaque chariot 22, qui a l'aspect général d'une fourche (figure 3), porte, sur sa face fourchue la plus écartée de l'axe 11, trois galets dépassant cette face, à savoir un galet supérieur 24 à l'extrémité de la fourche et deux galets inférieurs 25 à la base de la fourche. Lorsque les bras 21 sont en position écartée l'un de l'autre, les chariots 22 sont appliqués contre la paroi 10, de telle sorte que, lorsque la sonde est relevée par traction du câble 7, les galets 24 et 25 offriraient aux chariots une ligne ou sensiblement un plan d'appui et de roulement dans la direction du forage, si aucun élément du chariot ne s'étendait au-delà de leur alignement. Mais, selon l'invention, les chariots 22 portent, chacun, un outil dur 26, par exemple en acier à outil ou en carbure de tungstène, qui dépasse au-delà de l'alignement ou du plan affleurant les galets 24 et 25. L'outil 26 est monté sur un porte-outil 27 fixé entre deux flancs du chariot 22 par des vis 28. Cet outil doit se situer, en hauteur, entre l'axe 23 et le galet 24, c'est-à-dire que l'axe 23 doit être situé en écartement entre les galets 25 et l'outil 26.

L'outil 26 est prévu pour pénétrer dans la paroi 10 pour y pratiquer une saignée lorsque les chariots sont en appui contre les parois et qu'ils sont simultanément tractés vers le haut du forage. Connaissant la courbure du forage, il est aisé de régler leur distance de dépassement au-delà du plan affleurant les galets 24 et 25 pour qu'ils pénètrent d'une profondeur voulue lorsque ces galets sont effectivement en appui contre les parois 10 du forage.

Le dispositif 3 de poussée en écartement des chariots 22 vers la paroi 10 est constitué par un vérin hydraulique 31 à commande oléo-pneumatique contre la force d'un ressort de rappel 32 agissant sur son piston 33.

La tige 34 du vérin 31 agit en poussée directement sur une face 29 de chacun des bras oscillant 21, ladite face constituant bras de levier pivotant autour de l'axe 20 et s'étendant vers l'axe 11. La poussée vers le bas du vérin 31 assure donc l'appui des chariots 22 comme il a été exposé. Le vérin 31 est alimenté en pression hydraulique à travers une canalisation 35 par l'intermédiaire d'une chambre à membrane 41 qui reçoit une pression pneumatique provenant d'un réservoir de pression 44 à travers une canalisation 42 et une électrovanne 43. Une seconde électrovanne 45 permet de commander le vérin en relâchement par mise à l'air du côté pneumatique de la chambre à membrane 41.

La sonde comporte en outre, un dispositif, insensible à l'eau et aux boues, de mesure de son déplacement linéaire, constitué par une roulette 51 d'axe horizontal 55 montée folle à l'extrémite d'un bras 52 monté oscillant dans le plan axial de la sonde autour d'un pivot 53 porté par le corps 1. Un deuxième bras 54 est articulé par l'une de ses extrémités sur l'axe 55 de rotation de la roulette 51 et est guidé en coulissement par son autre extrémité sur une tige 56 constituant glissière par l'intermédiaire d'un coulisseau articulé 57. Un ressort 58 tend à repousser le coulisseau 57 vers le bas et donc à écarter la roulette 51 au contact de la paroi 10. La roulette 51 est appliquée contre la paroi 10 avec adhérence, grâce à une pluralité de dents 59 qui en dépassent. Ces dents sont en matériau ferro-magnétique, par exemple des aimants permanents, dont le passage en rotation peut être détecté par un interrupteur magnétique 60, du type connu sous le nom d'interrupteur à lame souple, monté sur le bras 52. Lorsque la roulette se déplace verticalement avec la sonde contre la paroi 10, le passage de chaque dent 59 devant l'interrupteur 60 provoque une impulsion. Connaissant la distance périphérique des dents 59, on déduit facilement la longueur du parcours de la sonde du nombre d'impulsions reçues. On voit que ce dispositif est insensible à l'eau et aux boues.

Pour le passage des bras 52 et 54, le corps 1 présente une fente le long d'une génératrice 64 sur une hauteur convenable. Sur cette hauteur, la tige 56 et des tiges 65 donnent au corps une rigidité suffisante et sont protégées par une simple enveloppe cylindrique fendue.

La sonde comporte encore des liaisons électriques dont, pour plus de simplicité du dessin, on n'a représenté que les extrémités. Les électrovannes 43 et 45 reçoivent leurs ordres de la surface respectivement par des conducteurs 46 et 47. L'interrupteur 60 envoie ses signaux à la surface d'un compteur d'impulsions par un conducteur 61. Un câble de raccordement 63, lié de façon connue en soi au câble de traction 7, réunit le conducteur du dynamomètre 6 et un câble 62 réunissant les conducteurs 46 et 47. L'interrupteur 60 envoie ses signaux à la surface d'un compteur d'impulsions faire passer dans le boîtier du dynamomètre grâce à des bornes de jonction appropriées.

A la figure 5, on a représenté une variante, dans laquelle les bras 22 sont prolongés, en écartement, par des rallonges 19 à l'extrémité desquelles sont montés articulés les chariots 22. Un ressort 18 tend à rapprocher les chariots 22 pour faciliter l'introduction et la descente de la sonde dans le forage.

Avec les rallonges 19 on pourra, par exemple, explorer un forage de 400 mm avec une sonde de 60 mm de diamètre dont la configuration des figures 1 à 4 permetrait d'explorer des forages de 80 à 200 mm.

Le corps 1 de la sonde peut, bien entendu, comporter d'autres capteurs de mesure, notamment de pression hydrostatique et de température, dont ·les indications électriques pourront être transmises par le câble 63.

L'utilisation de la sonde est trés simple. On rétracte le vérin, puis on introduit la sonde au niveau désiré mesuré soit par la longueur de câble déroulé, soit par mesure de pression hydrostatique. On commande la mise en pression du vérin, ce qui provoque l'appui diamétralement opposé des chariots sur la paroi du forage. On tracte le câble de traction au moyen du treuil de surface, soit sur une longueur fixée à l'avance, soit jusqu'à ce que le dynamomètre indique une variation significative de l'effort de traction. L'étalonnage de l'appareil est très simple puisqu'il suffit, pour un réglage d'outil donné, d'établir le rapport entre résistance à la compression et force de traction par un essai unique. Ce rapport sera pris comme coefficient applicable aux autres mesures de force de traction pour en déduire la résistance à la compression.

**Revendications**

1. Procédé de mesure analogique de la dureté d'une roche affleurant la paroi (10) d'un forage au moyen d'une sonde liée à un câble de traction, dans lequel on munit la sonde de deux outils de rayage (26) diamétralement opposés, on les écarte à force et on exerce une traction ascendante sur le câble (7), caractérisé en ce qu'on enfonce les outils de rayage (26) d'une profondeur constante de pénétration dans la roche et on mesure la force de traction exercée sur le câble (7) pendant le déplacement ascendant de la sonde (1).

2. Sonde de mesure de la dureté d'une roche affleurant la paroi d'un forage destinée à être liée à un câble pour la mise en oeuvre du procédé selon la revendication 1, caractérisée en ce qu'elle comporte un ensemble comprenant:

—deux chariots (22) diamétralement opposés, mobiles en écartement et en rapprochement l'un de l'autre, chacun des chariots (22) comportant:

—au moins deux galets d'appui (24, 25) à la paroi écartés dans la direction du forage et disposés pour le déplacement en appui du chariot (22) dans cette même direction du forage,

—un outil (26) de pénétration par rayage disposé en position intermédiaire entre les galets d'appui (24, 25) écartés dans le sens du forage et s'étendant au-delà de l'alignement ou du plan défini par ces galets;

—des moyens commandés d'écartement à force des deux chariots (22) en appui contre la paroi (10) du forage;

—des moyens de mesure de la force de traction exercée sur le câble.

3. Sonde selon la revendication 2, caractérisée en ce que les chariots (22) sont portés oscillants à l'extrémité de bras oscillants (21) symétriquement en sens opposés et dirigés vers le bas.

4. Sonde selon la revendication 3, caractérisée en ce que l'axe d'oscillation de chaque chariot (22) est situé, en écartement, entre l'outil (26) de pénétration par rayage et le ou les galets (25) le plus ou les plus écartés du bras oscillant (21).

5. Sonde selon l'une quelconque des revendications 2 à 4, caractérisée en ce que les moyens commandés d'écartement à force des deux chariots (22) comportent un vérin (31), un réservoir de pression (44) et des moyens de commande électrique de mise en pression du vérin (31) par le réservoir (44) et de mise en détente du vérin (31).

6. Sonde selon les revendications 3 et 5 combinées, caractérisé en ce que le vérin (31) agit en écartement sur les bras oscillants (21).

7. Sonde selon l'une quelconque des revendications 2 à 6, caractérisée en ce qu'elle comporte des moyens élastiques (18) de rapprochement central des chariots (22).

8. Sonde selon l'une quelconque des revendications 2 à 7, caractérisée en ce qu'elle comporte des moyens de mesure de son déplacement linéaire dans le forage.

9. Sonde selon la revendication 8, caractérisée en ce que les moyens de mesure de déplacement linéaire de la sonde comportent une roulette folle (51), d'axe perpendiculaire à celui de la sonde, munie d'organes d'information (59) angulairement également répartis, un moyen de comptage (60) de passage des organes d'information (59) et un moyen (58) d'appui élastique de la roulette contre la paroi du sondage.

10. Sonde selon l'une quelconque des revendications 2 à 9, caractérisée en ce qu'elle comporte en outre un dynamomètre (6) intercalé entre le câble (7) et un corps (7) comportant les deux chariots (22) et les moyens d'écartement (31, 34) de ces chariots (22).

**Patentansprüche**

1. Verfahren zum analogen Messen der Härte des als Wand (10) einer Bohrung zu Tage tretenden Gesteins mit Hilfe einer mit einem Zugseil verbundenen Sonde, wobei die Sonde mit zwei diametral gegenüberliegenden Kratzwerkzeugen (26) versehen ist, die unter Krafteinwirkung gespreizt werden und die einen aufwärtsgehenden Zug auf das Seil (7) ausüben, dadurch gekennzeichnet, daß die Kratzwerkzeuge (26) auf eine konstante Eintauchtiefe in das Gestein eingedrückt werden und die auf das Seil (7) ausgeübte Zugkraft während der aufwärtsgehenden Bewegung der Sonde (1) gemessen wird.

2. Sonde zum Messen der Härte des als Wand einer Bohrung zu Tage tretenden Gesteins, welche Sonde mit einem Seil verbindbar ist, zur Durchführung des Verfahrens gemäß Anspruch 1, dadurch gekennzeichnet, daß sie als Ganzes folgendes aufweist:
zwei diametral einander gegenüberliegende zum gegenseitigen Spreizen und Zusammendrücken bewegliche Wagen (22), von denen jeder mindestens zwei Rollen (24, 25) zum Abstützen an der Wand, die in Richtung der Bohrung im Abstand und zum Verschieben unter Abstützung des Wagens (22) in diese Richtung der Bohrung angeordnet sind, und durch Kratzen eindringendes Werkzeug besitzt, das in einer Zwischenlage zwischen den in Richtung der Bohrung auseinanderligenden Abstütz-, rollen (24, 25) angeordnet ist, und das sich über die Fluchtlinie oder Ebene, die durch die Rollen definiert ist, erstreckt,
Steuermittel zum Spreizen der beiden Wagen (22) unter Krafteinwirkung zur Abstützung an der Wand (10) der Bohrung,
mit Mitteln zum Messen der auf das Seil ausgeübten Zugkraft.

3. Sonde nach Anspruch 2, dadurch gekennzeichnet, daß die Wagen (22) an den Enden von Armen (21), die in entgegengesetzten Richtungen symmetrisch hin- und hergehen und nach unten weisen, hin- und hergehend gehalten sind.

4. Sonde nach Anspruch 3, dadurch gekennzeichnet, daß die Achse der Hin- und Herbewegung jedes Wagens (22) in Abstand zwischen dem durch Kratzen eindringenden Werkzeug und der oder den Rollen (25), die am weitesten von dem hin- und hergehenden Arm (21) entfernt ist bzw. sind, angeordnet ist.

5. Sonde nach einem der Ansprüche 2 bis 4, dadurch gekennzeichnet, daß die Mittel zum Steuern des Spreizens der beiden Wagen (22) unter Krafteinwirkung eine Hubeinheit (31), einen Druckbehälter (44) und elektrische Steuermittel zum Unterdrucksetzen der Hubeinheit (31) durch den Behälter (44) und zum Entspannen der Hubeinheit (31) aufweisen.

6. Sonde nach den Ansprüchen 3 und 5, dadurch gekennzeichnet, daß die Hubeinheit (31) im Abstand auf die hin- und hergehenden Arme (21) wirkt.

7. Sonde nach einem der Ansprüche 2 bis 6, dadurch gekennzeichnet, daß sie elastische Mittel (18) zum mittigen Aufeinanderzubewegen der Wagen )22) aufweist.

8. Sonde nach einem der Ansprüche 2 bis 7, dadurch gekennzeichnet, daß sie Mittel zum Messen ihrer linearen Verschiebung in der Bohrung aufweist.

9. Sonde nach Anspruch 8, dadurch gekennzeichnet, daß die Mittel zum Messen der linearen Verschiebung der Sonde eine bewegliche Rolle (51) mit einer zu der der Sonde (1) senkrechten Achse, welche Rolle mit winklig gleichmäßig verteilten Informationselementen (59) versehen ist, ein Mittel (60) zum Zählen des Durchgangs der Informationsorgane (59) und ein Mittel (58) zum elastischen Abstützen der Rolle an der Wand der Bohrung aufweisen.

10. Sonde nach einem der Ansprüche 2 bis 9, dadurch gekennzeichnet, daß sie außerdem ein Dynamometer (6), das zwischen dem Seil (7) und einem Körper (1) angeordnet ist, der die beiden Wagen (22) und die Mittel (31, 34) zum Spreizen der beiden Wagen (22) besitzt, aufweist.

**Claims**

1. Process for the analog measurement of the hardness of rock flush with the wall (10) of a drill hole by means of a probe connected to a traction rope, in which the probe is provided with two diametrically opposite scoring tools (26) which are spaced apart by force and an upward traction is exerted on the rope (7), characterised in that the scoring tools (26) are driven into the rock by a constant depth of penetration and the force of traction exerted on the rope (7) during the upward movement of the probe (1) is measured.

2. Probe for measuring the hardness of rock flush with the wall of a drill hole, adapted to be connected to a rope for carrying out the process according to Claim 1, characterised in that it comprises an assembly composed of:

—two diametrically opposite carriages (22) movable towards and away from each other, each of the carriages (22) comprising:
—at least two rollers (24, 25) bearing on the wall, spaced apart in the direction of the drill hole and adapted to allow displacement of the carriage (22) in abutment in this same direction of the drill hole,
—a tool (26) for penetration by scoring disposed in intermediate position between the bearing rollers (24, 25) spaced apart in the direction of the drill hole and extending beyond the alignment or the plane defined by these rollers,
—controlled means for forcibly spacing apart the two carriages (22) in abutment against the wall (10) of the drill hole,

—means for measuring the force of traction exerted on the rope.

3. Probe according to Claim 2, characterised in that the carriages (22) are pivotally borne at the end of downwardly directed arms (21) pivoted symmetrically in opposite directions.

4. Probe according to Claim 3, characterised in that the pivot axis of each carriage (22) is located, in spaced apart state, between the tool (26) for penetration by scoring and the or each roller (25) furthest from the pivoting arm (21).

5. Probe according to any one of Claims 2 to 4, characterised in that the controlled means for forcibly spacing apart the two carriages (22) comprise a jack (31), a pressure tank (44) and electric control means for pressurising the jack (31) via the tank (44) and for relaxing the jack (31).

6. Probe according to combined Claims 3 and 5, characterised in that the jack (31) acts on the pivoting arms (21) to space them apart.

7. Probe according to any one of Claims 2 to 6, characterised in that it comprises elastic means (18) for centrally bringing together the carriages (22).

8. Probe according to any one of Claims 2 to 7, characterised in that it comprises means for measuring its linear displacement in the drill hole.

9. Probe according to Claim 8, characterised in that the means for measuring the linear displacement of the probe comprise an idle wheel (51), of axis perpendicular to that of the probe (1), provided with information members (59) which are equally distributed angularly, a means (60) for counting the passage of the information members (59) and a means (58) for allowing the wheel to bear elastically against the wall of the bore hole.

10. Probe according to any one of Claims 2 to 9, characterised in that it further comprises a dynamometer (6) inserted between the rope (7) and a body (1) comprising the two carriages (22) and the means (31, 34) for spacing these carriages (22) apart.

Fig.1

Fig.2

Fig.3

Fig.4

20    20

21

24    24

26    26

22    22

25    25

Fig.5

20    20

21    21  18

22    22

19    19